# EUROPÄISCHE PATENTSCHRIFT

(11) **EP 0 356 609 B1**
(45) Veröffentlichungstag und Bekanntmachung des Hinweises auf die Patenterteilung: **10.02.1993**
(21) Anmeldenummer: 89103724.4
(22) Anmeldetag: 03.03.1989
(51) Int. Cl.: G05D 23/20, F24D 19/10

(54) **Sollwertgeber für einen Brauchwasserspeicher-Regler**
Set-point adjuster for a domestic hot water storage regulator
Générateur de valeur de consigne pour régulateur d'accumulateur d'eau chaude sanitaire

(30) Priorität: 31.08.1988 CH 3242/88
(43) Veröffentlichungstag der Anmeldung: 07.03.1990
(73) Patentinhaber: Landis & Gyr Business Support AG, 6301 Zug (CH)
(72) Erfinder: Studer, Werner, CH-6315 Oberägeri (CH)
(74) Vertreter: Müller, Hans-Jürgen, Dipl.-Ing.

(56) Entgegenhaltungen:
- EP-A- 0 038 964
- DE-A- 2 804 079
- DE-A- 2 930 187
- GB-A- 2 146 797
- US-A- 4 467 178
- US-A- 4 568 821
- US-A- 4 620 667

## Beschreibung

Die Erfindung bezieht sich auf einen Sollwertgeber für einen Brauchwasserspeicher-Regler gemäß dem Oberbegriff des Anspruchs 1, wie aus GB-A-2 146 797 bekannt.

Regler für Brauchwasserspeicher besitzen in der Regel einen Sollwertgeber, der auf eine bestimmte Temperatur einstellbar ist. Diese einstellbare Temperatur bildet den Sollwert für die Aufheizung des Brauchwasserspeichers.

Aus der EP-B1-00 38 964 ist bekannt, Warmwasser in einem Speicherbehälter mit relativ geringer Temperatur zur Verfügung zu halten und dieses Warmwasser im Moment des Verbrauchs mittels eines Durchlauferhitzers auf die gewünschte höhere Zapftemperatur zu bringen. Bei der Vorratshaltung von Warmwasser entstehen dabei geringere Wärmeverluste gegenüber dem Fall, daß der Speicherbehälter Wasser der höheren Zapftemperatur beinhaltet. Allerdings ist der apparative Aufwand groß, weil neben dem Speicherbehälter noch ein Durchlauferhitzer benötigt wird.

Aus der DE-AS 29 30 187 ist auch bekannt, daß man die Menge der zur Aufheizung von Brauchwasser benötigten Fremdenergie dadurch zu reduzieren sucht, daß man Abfallwärme zurückgewinnt.

In der Regel wird das warme Brauchwasser mit einer Temperatur bereitgehalten, die höher liegt als die wirkliche Verbrauchstemperatur. So wird beispielsweise der Brauchwasserspeicher auf 60 Grad Celsius aufgeheizt, während der Verbrauch bei einem Temperaturniveau von etwa 40 Grad Celsius erfolgt. Der Verbraucher mischt dabei eine jeweils unterschiedliche Menge kalten Wassers zu, um die gewünschte Auslauftemperatur zu erhalten. Zur Steigerung der Bequemlichkeit für den Verbraucher sind auch thermostatisch wirkende Armaturen verfügbar.

Die Menge des dem Verbraucher zur Verfügung stehenden Gebrauchswassers (40 Grad Celsius) hängt dabei von zwei Größen ab: Einerseits ist sie durch das Nutzvolumen des Brauchwasserspeichers bestimmt, andererseits hängt sie von der Höhe der Temperatur des Wassers im Brauchwasserspeicher ab. Wird bei gegebenem Nutzvolumen des Brauchwasserspeichers die Temperatur erhöht, so steht dem Verbraucher eine größere Menge Gebrauchswasser zur Verfügung. Gleichzeitig werden jedoch die Wärmeverluste größer und die Neigung zur Verkalkung nimmt zu.

Der Erfindung liegt die Aufgabe zugrunde, Warmwasser entsprechend dem aufgrund der Verbrauchsgewohnheiten zeitlich schwankenden Bedarf in ausreichender Menge bereitzustellen und außerdem die Energieverluste bei der Vorratshaltung von Warmwasser zu minimieren. Gleichzeitig soll die Verkalkungsgefahr verringert werden.

Aus der GB-A-2 146 797 und der US-A-4 620 667 sind Systeme, die diese Problematik zu lösen versuchen, bereits bekannt.

Die genannte Aufgabe wird erfindungsgemäß durch die Merkmale des Anspruchs 1 gelöst. Vorteilhafte Ausgestaltungen ergeben sich aus den Unteransprüchen.

Nachfolgend wird ein Ausführungsbeispiel der Erfindung anhand der Zeichung näher erläutert.

Es zeigen
- Fig. 1: ein Blockschaltbild eines Sollwertgebers, und
- Fig. 2: ein Diagramm der in einem Speicher abgelegten Solltemperaturen in Funktion des Zeitablaufs einer Woche.

In der Fig. bedeutet 1 einen Sollwertgeber für einen Brauchwasserspeicher-Regler. Dieser Sollwertgeber 1 enthält einen Grenzwertspeicher 2, in dem ein unterer Grenzwert T_{Gmin} und ein oberer Grenzwert T_{Gmax} für die Solltemperatur Tₛ des Brauchwasserspeichers entweder fest eingespeichert oder eingebbar sind. Durch den oberen Grenzwert T_{Gmax} wird dabei die aufgrund der Bauart des Brauchwasserspeichers maximal zulässige Betriebstemperatur berücksichtigt.

Mit 3 ist ein Logikglied bezeichnet, das später beschrieben wird. Das Logikglied 3 weist drei Eingänge auf, von denen der eine mit dem Grenzwertspeicher 2 verbunden ist, während der zweite mit einem Temperaturfühler 4 verbunden ist, der die Temperatur im Brauchwasserspeicher mißt. Durch einen dritten Eingang ist das Logikglied 3 mit einem Zeitglied 5 verbunden. Das Logikglied 3 besitzt außerdem einen Ausgang, der über eine Schreib- und Leseleitung 6 mit einem Speicher 7 verbunden ist. Der Speicher 7 weist neben einem Eingang, an den die Schreib- und Leseleitung 6 angeschlossen ist, einen weiteren Eingang auf, an den eine Verbindung zum Zeitglied 5 angeschlossen ist. Über eine Leitung 8 ist das Logikglied 3 außerdem mit einem Steuermodul 9 verbunden. Von diesem Steuermodul 9 wird ein Schalter 10 betätigt. Der Schalter 10 ist mit einem Schaltmodul 11 verbunden, das nicht zum Sollwertgeber 1 gehört, sondern in der Regel Bestandteil eines Brauchwasserspeicher-Reglers ist. Der Schalter 10 weist drei mögliche Lagen auf. In einer ersten Lage besteht eine Verbindung vom Speicher 7 über den Schalter 10 zum Schaltmodul 11, in einer zweiten Lage besteht eine Verbindung vom Steuermodul 9 über den Schalter 10 zum Schaltmodul 11 und in einer dritten Lage besteht keine Verbindung vom Schaltmodul 11 zum Speicher 7 oder zum Steuermodul 9.

Das Schaltmodul 11 hat zwei Eingänge. An einem ersten Eingang liegt das Signal des Temperaturfühlers 4 im Brauchwasserspeicher an, an einem zweiten Eingang liegt der Sollwert Tₛ für die Brauchwassertemperatur an. Liegt die Isttemperatur des Brauchwassers über dem anliegenden Sollwert, ist der vom Schaltmodul 11 geschaltete Boilerkreis ausgeschaltet. Liegt die Isttemperatur des Brauchwassers unter dem anliegenden Sollwert, ist der Boilerkreis eingeschaltet. Beim Vergleich von Istwert und Sollwert wird üblicherweise eine Schalthysterese vorgesehen, die auch einstellbar sein kann. Beträgt die Schalthysterese beispielsweise 4 Grad, so erfolgt das Einschalten, wenn die Isttemperatur 2 Grad unter dem Sollwert liegt, während das Ausschalten erfolgt, wenn die Isttemperatur 2 Grad über dem Sollwert liegt.

Eingeschaltet bedeutet bei einem elektrisch beheizten Brauchwasserspeicher, daß die elektrische Heizwicklung in Betrieb ist. Wird der Brauchwasserspeicher dagegen durch einen beispielsweise ölgefeuerten Heizkessel aufgeheizt, so bedeutet eingeschaltet, daß ein etwa vorhandenes Absperrventil geöffnet und die Boilerladepumpe in Betrieb ist.

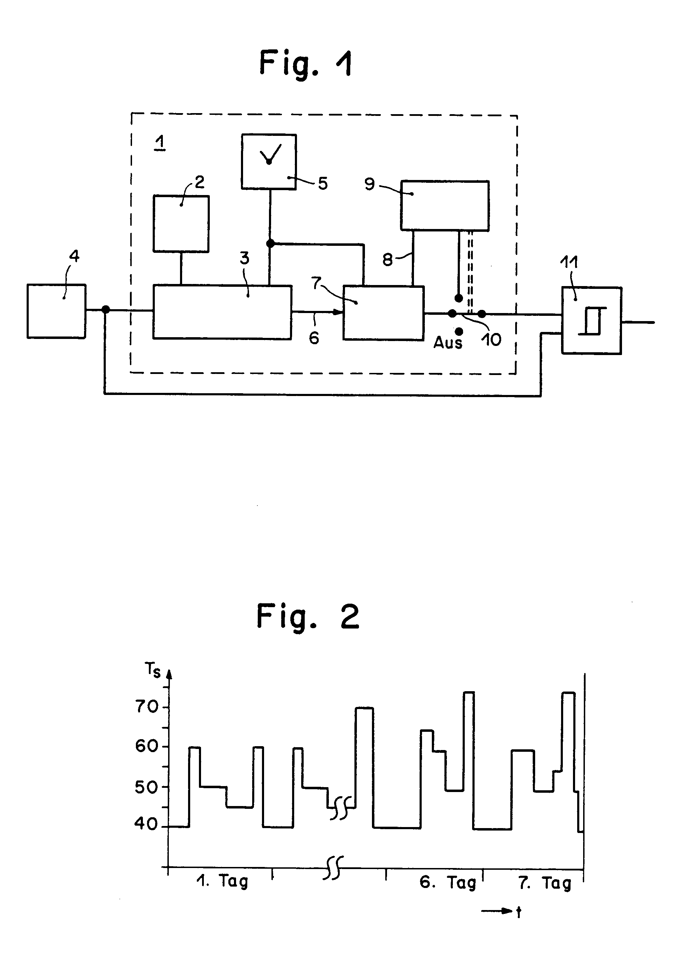

Im Speicher 7 sind für unterschiedliche Zeitpunkte unterschiedliche Sollwerte Tₛ der Temperatur des Wassers im Brauchwasser-Speicher abgelegt. Die Fig. 2 zeigt ein Diagramm der Sollwerte Tₛ in Abhängigkeit von der Zeit. In der Regel schwankt der Warmwasserbedarf je nach Tageszeit und je nach Wochentag. Montags bis freitags besteht in der Regel ein erhöhter Warmwasserbedarf zwischen morgens 6 Uhr und morgens 8 Uhr sowie am Abend gegen 22 Uhr. An Samstagen und Sonntagen tritt der morgendliche Spitzenbedarf meist später auf, zum Beispiel zwischen 8 Uhr und 10 Uhr, und der abendliche Spitzenbedarf mag etwas höher sein und etwas später vorliegen.

Die Bedürfnisse der Verbraucher unterscheiden sich in der Regel deutlich. Deshalb ist es nicht zweckmäßig, im Speicher 7 fixe Sollwerte Tₛ zu speichern. Erfindungsgemäß sollen sich die Sollwerte Tₛ im Speicher 7 gemäß den Bedürfnissen der Verbraucher verändern können. Stellt sich beispielsweise heraus, daß freitags gegen 17 Uhr das vorhandene Warmwasser nicht ausreicht, was sich daran zeigt, daß die Temperatur im Brauchwasserspeicher unter den Sollwert Tₛ fällt, so wäre es zweckmäßig gewesen, wenn gegen 16 Uhr die Temperatur im Brauchwasserspeicher höher gewesen wäre, weil dann mehr warmes Brauchwasser zur Verfügung gestanden hätte. Da, wie schon gesagt, der Bedarf der Benutzer meist periodischen Schwankungen unterworfen ist und sich im Wochenrhytmus wiederholt, ist es zweckmäßig, aus der Tatsache, daß zu einem Zeitpunkt tₙ, nicht genügend warmes Brauchwasser zur Verfügung gestanden hat, abzuleiten, daß in den Speicher 7 ein neuer Sollwert Tₛ für den Zeitpunkt tₙ₋₁ geschrieben wird, der höher liegt als der bisherige Sollwert für den Zeitpunkt tₙ₋₁. Wiederholt sich in der folgenden Woche der erhöhte Bedarf zum Zeitpunkt tₙ so steht tatsächlich mehr warmes Brauchwasser zur Verfügung, weil der Brauchwasserspeicher zum Zeitpunkt tₙ₋₁ auf einen höheren Sollwert Tₛ aufgeheizt worden ist. In analoger Weise erfolgt die Korrektur nach unten.

Der Sollwertgeber für einen Brauchwasserspeicher-Regler weist also einen Speicher 7 auf, in dem die für jeden diskreten Zeitabschnitt t einer Vielzahl von Zeitabschnitten gültige Solltemperatur Tₛ des Brauchwasserspeichers gespeichert ist. Er enthält ein Zeitglied 5, das den zeitlichen Ablauf steuert. Weiterhin enthält er einen Grenzwertspeicher 2, in dem ein oberer Grenzwert T_{Gmax} und ein unterer Grenzwert T_{Gmin} für die Solltemperatur Tₛ des Brauchwasserspeichers gespeichert ist. Daneben enthält er ein Logikglied 3, in dem der Istwert T_{I} der Temperatur des Brauchwasserspeichers verglichen wird mit der zu einem bestimmten Zeitpunkt tₙ gültigen Solltemperatur Tₛ und mit dem oberen Grenzwert T_{Gmax} und mit dem unteren Grenzwert T_{Gmin}. Das Logikglied 3 korrigiert den Sollwert Tₛ des Brauchwasserspeichers für den vorangegangen Zeitabschnitt tₙ₋₁ nach oben, wenn der Istwert T_{I} der Temperatur des Brauchwasserspeichers kleiner ist als die Solltemperatur Tₛ und kleiner ist als der obere Grenzwert T_{Gmax} und korrigiert den Sollwert Tₛ nach unten, wenn der Istwert T_{I} der Temperatur des Brauchwasserspeichers größer ist als die Solltemperatur Tₛ und größer ist als der untere Grenzwert T_{Gmin}.

Die Erhöhung oder Erniedrigung des Sollwertes Tₛ kann um einen bestimmten Betrag, beispielsweise um jeweils 5 Grad Celsius erfolgen. War der Sollwert Tₛ zuletzt 50 Grad Celsius und soll der Sollwert Tₛ nach oben korrigiert werden, so wird er neu auf 55 Grad Celsius gesetzt. Soll er nach unten korrigiert werden, so wird er auf 45 Grad gesetzt. Die Korrektur erfolgt jeweils so, daß das Logikglied 3 über die Schreib- und Leseleitung 6 den im Speicher 7 für den Zeitpunkt tₙ₋₁ gültigen Wert ausliest, die erwähnten Vergleiche und Korrekturen ausführt und dann wiederum über die Schreib- und Leseleitung 6 den neuen Wert für den Zeitpunkt tₙ₋₁ in den Speicher 7 einschreibt.

Durch diese Art der Korrektur lernt der Sollwertgeber selbsttätig, welcher Bedarf an Warmwasser beim Benutzer besteht. Dadurch wird erreicht, daß in Abhängigkeit von den Gewohnheiten des Benutzers immer genügend, aber auch nicht zu viel Warmwasser vorgehalten wird. Gleichzeitig ist die Temperatur im Brauchwasserspeicher nicht höher als nötig, was einerseits die Wärmeverluste minimal hält und andererseits die Verkalkungsgefahr auf das Unumgängliche drückt.

Um den Bedarf an Speicherplätzen im Speicher 7 in Grenzen zu halten, ist es vorteilhaft, wenn jeder diskrete Zeitabschnitt t eine Stunde umfaßt. Es ist weiter vorteilhaft, wenn das Zeitglied 5 so viele Zeitabschnitte umfaßt, daß der gesamte Zeitraum der aneinandergereihten Zeitabschnitte eine Woche bildet, bei der Länge des Zeitabschnitts t gleich einer Stunde entsprechend 168 diskrete Zeitabschnitte. Da die Kosten für Speicherplätze nicht groß sind, kann es auch zweckmäßig sein, vorzusehen, daß jeder Zeitabschnitt t eine halbe Stunde repräsentiert und eine Woche damit in 336 diskrete Zeitabschnitte unterteilt ist. Damit wird eine meist optimale Anpassung an die Gewohnheiten der Benutzer erreicht, die in der Regel durch einen mehr oder weniger regelmäßigen Wochenrhythmus bestimmt werden.

Es ist vorteilhaft, wenn außerdem ein Steuermodul 9 vorhanden ist, das gegenüber dem Speicher 7 auf Vorrang schaltbar ist. Damit wird erreicht, daß der Benutzer im Falle von Abweichungen von den üblichen Gewohnheiten nicht an das normale, im Speicher 7 abgelegte Wochenprogramm gebunden ist. Vorteilhaft ist es, wenn das Steuermodul 9 auf "MANUELL" umschaltbar ist, wobei sich dann dem Benutzer die Möglichkeit bietet, eine bestimmte Solltemperatur Tₛ manuell einzugeben. Er wird dies beispielsweise dann tun, wenn sich beispielsweise Gäste in der Wohnung des Benutzers aufhalten, so daß dann ein höherer Bedarf an warmem Wasser vorliegt.

Vorteilhaft ist es auch, wenn das Steuermodul 9 auf "SONDERLADUNG" umschaltbar ist, wobei dann beispielsweise ein einmaliges kurzzeitiges Aufheizen auf den oberen Grenzwert T_{Gmax} eingeleitet wird. Diese Möglichkeit wird der Benutzer beispielsweise dann wählen, wenn einmalig ein außergewöhnlicher Bedarf an einer großen Menge warmen Wassers besteht.

Wird der Sollwertgeber in Verbindung mit einer elektrischen Warmwasserbereitung eingesetzt, dann ist es vorteilhaft, wenn im Steuermodul 9 Zeitabschnitte eingebbar sind, während der das Schaltmodul 11 überhaupt gesperrt wird, so daß das Einschalten der Aufheizung des Brauchwasserspeichers unmöglich ist. Das Sperren kann dadurch erfolgen, daß das Steuermodul 9 den Schalter 10 für die jeweilige Sperrzeit in die Stellung "AUS" schaltet. Dadurch lassen sich Forderungen der Elektrizitätsversorgungsunternehmen erfüllen, daß elektrische Brauchwasserspeicher während Spitzenlastzeiten nicht eingeschaltet sein dürfen. Das Steuermodul 9 kann dabei auch so ausgebildet sein, daß es mit einem Rundsteuerempfänger verbindbar ist und vom Rundsteuerempfänger die Information darüber aufnimmt, ob die Beheizung des Brauchwasserspeichers gestattet ist oder nicht.

Vorteilhaft ist es, wenn während solchen Zeitabschnitten, während denen das Schaltmodul 11 gesperrt ist, bei der Korrektur der Solltemperatur für einen zurückliegenden Zeitabschnitt nicht jeweils für den unmittelbar zurückliegenden Zeitabschnitt die Sollwert-Korrektur erfolgt, sondern grundsätzlich immer für den letzten Zeitabschnitt, der den gesperrten Zeitabschnitten vorausgeht. Dadurch wird in vorteilhafter Weise erreicht, daß vor Beginn einer solchen Sperrzeit der Brauchwasserspeicher so weit aufgeheizt wird, daß während der Sperrzeit genügend warmes Wasser zur Verfügung steht.

Eine weitere vorteilhafte Ausgestaltung besteht darin, daß das Steuermodul 9 auf "FEIERTAG" umstellbar ist. Das Steuermodul 9 liest dabei die für den Sonntag, - beispielsweise die Zeitabschnitte 145 bis 168 -, gültigen Solltemperaturen aus dem Speicher 7 aus und übernimmt diese Sollwerte für einen Zeitraum von einem Tag. Dies trägt der Tatsache Rechnung, daß an Wochenfeiertagen die Benutzer oftmals die gleichen Gewohnheiten haben wie sonst an Sonntagen.

In ähnlicher Weise kann vorteilhaft auch noch eine Stellung "FERIEN" am Steuermodul 9 vorgesehen werden. In dieser Stellung übernimmt das Steuermodul 9 für alle Wochentage, also für den Zeitraum einer Woche, das sonst nur für den Sonntag im Speicher 7 enthaltene Programm.

Die Stellungen "FEIERTAG", "FERIEN", "SONDERLADUNG" und "MANUELL" bieten somit die Möglichkeit, daß individuelle Wünsche des Benutzers erfüllt werden können. Sie dienen damit der Steigerung des Komforts des Benutzers.

Der Sollwertgeber hält sich auf vorteilhafte Weise mit einem Mikroprozessor und einem darin ablaufenden Programm realisieren. Dadurch bedingen die genannten vorteilhaften Ausgestaltungen praktisch keinen apparativen Mehraufwand, weil sie sich durch einfache Programmergänzungen realisieren lassen.

## Patentansprüche

1. Sollwertgeber für einen ein Schaltmodul enthaltenden Brauchwasserspeicher-Regler mit Mitteln zum Einstellen der Solltemperatur des Brauchwasserspeichers, wobei er ein Zeitglied und einen Grenzwertspeicher, in dem ein oberer Grenzwert (T_{Gmax}) und ein unterer Grenzwert (T_{Gmin}) für die Solltemperatur (Tₛ) des Brauchwasserspeichers gespeichert ist, enthalt, dadurch gekennzeichnet,
- daß er einen Speicher (7) aufweist, in dem die für jeden diskreten Zeitabschnitt (t) einer Vielzahl von Zeitabschnitten gültige Solltemperatur (Tₛ) des Brauchwasserspeichers gespeichert ist,
- daß er ein Logikglied (3) enthält, in dem der Istwert (T_{I}) der Temperatur des Brauchwasserspeichers verglichen wird mit der zu einem bestimmten Zeitpunkt (tₙ) gültigen Solltemperatur (Tₛ) und mit dem oberen und dem unteren Grenzwert (T_{Gmax};T_{Gmin}), in dem der Sollwert (Tₛ) des Brauchwasserspeichers für einen zurückliegenden Zeitabschnitt (tₙ₋₁) nach oben korrigiert wird, wenn der Istwert (T_{I}) der Temperatur des Brauchwasserspeichers kleiner ist als die Solltemperatur (Tₛ) und kleiner ist als der obere Grenzwert (T_{Gmax}) und nach unten korrigiert wird, wenn der Istwert (T_{I}) der Temperatur des Brauchwasserspeichers größer ist als die Solltemperatur (Tₛ) und größer ist als der untere Grenzwert (T_{Gmin}).

2. Sollwertgeber nach Anspruch 1, dadurch gekennzeichnet, daß jeder diskrete Zeitabschnitt (t) eine halbe oder eine ganze Stunde umfaßt.

3. Sollwertgeber nach Anspruch 2, dadurch gekennzeichnet, daß das Zeitglied (5) 336 oder 168 diskrete Zeitabschnitte (t) umfaßt.

4. Sollwertgeber nach einem der Ansprüche 1 bis 3, dadurch gekennzeichnet, daß ein Steuermodul (9) vorhanden ist, das gegenüber dem Speicher (7) auf Vorrang schaltbar ist, so daß im Steuermodul (9) fest programmierte und/oder einstellbare Sollwerte auf das Schaltmodul (11) gegeben werden.

5. Sollwertgeber nach Anspruch 4, dadurch gekennzeichnet, daß das Steuermodul (9) auf "MANUELL" schaltbar ist und dann eine feste Solltemperatur (Tₛ) einstellbar ist.

6. Sollwertgeber nach einem der Ansprüche 4 oder 5, dadurch gekennzeichnet, daß das Steuermodul (9) auf "SONDERLADUNG" schaltbar ist, wodurch der Brauchwasserspeicher auf den oberen Grenzwert (T_{Gmax}) aufgeladen wird.

7. Sollwertgeber nach einem der Ansprüche 4 bis 6, dadurch gekennzeichnet, daß im Steuermodul (9) Zeitabschnitte (tₙ) eingebbar und/oder fest vorgegeben sind, während der das Schaltmodul (11) gesperrt wird, so daß der Brauchwasserspeicher während dieser Zeitabschnitte (tₙ) nicht aufgeladen wird.

8. Sollwertgeber nach einem der Ansprüche 4 bis 7, dadurch gekennzeichnet, daß das Steuermodul (9) auf "FEIERTAG" schaltbar ist, wodurch das Steuermodul (9) über eine Leitung (8) die für den Sonntag gültigen Solltemperaturen liest und für einen Zeitraum von einem Tag übernimmt.

9. Sollwertgeber nach einem der Ansprüche 4 bis 8, dadurch gekennzeichnet, daß das Steuermodul (9) auf "FERIEN" schaltbar ist, wodurch das Steuermodul (9) über die Leitung (8) die für den Sonntag gültigen Solltemperaturen liest und für einen Zeitraum von einer Woche übernimmt.

## Claims

1. A set-point adjuster for a consumer water tank regulator containing a switch module, with means for setting the desired temperature of the consumer water tank, wherein it contains a clock and a limit value memory in which an upper limit value (T_{Gmax}) and a lower limit value (T_{Gmin}) are stored for the desired temperature (Tₛ) of the consumer water tank, characterised in that,
- it has a memory (7) in which the desired temperature (Tₛ) of the consumer water tank which is effective for each discrete time interval (t) of a plurality of time intervals is stored,
- that it has a logic device (3) in which the actual value (T_{I}) of the temperature of the consumer water tank is compared with the desired temperature (Tₛ) which is effective at a particular time (tₙ) and with the upper and lower limit value (T_{Gmax};T_{Gmin}), in which the desired value (Tₛ) of the consumer water tank for a time interval (tₙ₋₁) to be covered is adjusted upwardly if the actual value (T_{I}) of the temperature of the consumer water tank is less than the desired temperature (Tₛ) and less than the upper limit value (T_{Gmax}) and is adjusted downwardly if the actual value (T_{I}) of the temperature of the consumer water tank is higher than the desired temperature (Tₛ) and higher than the lower limit value (T_{Gmin}).

2. A set-point adjuster according to Claim 1, characterised in that each discrete time interval (t) covers half an hour or a whole hour.

3. A set-point adjuster according to Claim 2, characterised in that the clock (5) covers 336 or 168 discrete time intervals (t).

4. A set-point adjuster according to one of Claims 1 to 3, characterised in that a control module (9) is provided which can be switched so that it takes priority over the memory (7), so that fixed programmed and/or adjustable desired values in the control module (9) are given to the switch module (11).

5. A set-point adjuster according to Claim 4, characterised in that the control module (9) can be switched to "MANUAL" and then a fixed desired temperature (Tₛ) can be set.

6. A set-point adjuster according to one of Claims 4 or 5, characterised in that the control module (9) can be switched to "SPECIAL LOAD", whereby the consumer water tank is heated to the upper limit value (T_{Gmax}).

7. A set-point adjuster according to one of Claims 4 to 6, characterised in that time intervals (tₙ) can be input and/or are fixedly pre-set in the control module (9), during which the switch module (11) is off, so that the consumer water tank is not heated during those time intervals (tₙ).

8. A set-point adjuster according to one of Claims 4 to 7, characterised in that the control module (9) can be switched to "DAY OF REST", whereby the control module (9) reads the desired temperatures effective for Sunday via a line (8) and takes over responsibility for the period of one day.

9. A set-point adjuster according to one of Claims 4 to 8, characterised in that the control module (9) can be switched to "HOLIDAY", whereby the control module (9) reads the desired temperatures effective for Sunday via a line (8), and takes over responsibility for a period of one week.

## Revendications

1. Générateur de grandeur de consigne pour un régulateur de réservoir d'eau sanitaire qui comprend un module de commutation, comprenant des moyens de réglage de la température de consigne du réservoir d'eau sanitaire, ce générateur comprenant une horloge et une mémoire de seuils dans laquelle un seuil supérieur (T_{Gmax}) et un seuil inférieur (T_{Gmin}) de la température de consigne (Tₛ) du réservoir d'eau sanitaire sont mémorisés, caractérisé
- en ce qu'il comprend une mémoire (7) dans laquelle est mémorisée la température de consigne (Tₛ) du réservoir d'eau sanitaire qui est valable pour chaque intervalle de temps discret (t) compris dans de multiples intervalles de temps,
- en ce qu'il comprend un circuit logique (3) dans lequel la valeur réelle (T_{I}) de la température du réservoir d'eau sanitaire est comparée avec la température de consigne (Tₛ) qui est valable à un instant déterminé (tₙ) et avec les seuils supérieur et inférieur (T_{Gmax} ; T_{Gmin}), circuit logique dans lequel la consigne (Tₛ) du réservoir d'eau sanitaire est corrigée vers le haut pour un intervalle de temps précédent (tₙ₋₁), lorsque la valeur réelle (T_{I}) de la température du réservoir d'eau sanitaire est inférieure à la température de consigne (Tₛ) et inférieure au seuil supérieur (T_{Gmax}),et est corrigée vers le bas lorsque la valeur réelle (T_{I}) de la température du réservoir d'eau sanitaire est supérieure à la température de consigne (Tₛ) et supérieure au seuil inférieur (T_{Gmin}).

2. Générateur de grandeur de consigne selon la revendication 1, caractérisé en ce que chaque intervalle de temps discret (t) est d'une demi-heure ou d'une heure entière.

3. Générateur de grandeur de consigne selon la revendication 2, caractérisé en ce que l'horloge (5) comprend 336 ou 168 intervalles de temps discrets (t).

4. Générateur de grandeur de consigne selon l'une des revendications 1 à 3, caractérisé en ce qu'il comprend un module de commande (9) qui est commutable en ayant la priorité sur la mémoire (7), de manière que des consignes programmées de manière permanente dans le module de commande (9) et/ou réglables puissent être envoyées au module de commutation (11).

5. Générateur de grandeur de consigne selon la revendication 4, caractérisé en ce que le module de commande (9) est commutable sur "manuel" et alors une consigne fixe de température (Tₛ) est réglable.

6. Générateur de grandeur de consigne selon l'une des revendications 4 ou 5, caractérisé en ce que le module de commande (9) est commutable sur "charge spéciale", ce qui provoque la charge du réservoir d'eau chaude au seuil supérieur (T_{Gmax}).

7. Générateur de grandeur de consigne selon l'une des revendications 4 à 6, caractérisé en ce qu'il est possible d'entrer et/ou d'inscrire de manière permanente dans le module de commande (9) des intervalles de temps (tₙ) pendant lesquels le module de commutation (11) est bloqué, de sorte que le réservoir d'eau sanitaire n'est pas chargé pendant ces intervalles de temps (tₙ).

8. Générateur de grandeur de consigne selon l'une des revendications 4 à 7, caractérisé en ce que le module de commande (9) est commutable sur "jour férié", de manière que le module de commande (9) lise au moyen d'un conducteur (8) les températures de consigne qui sont valables pour le dimanche et les utilise pendant la durée d'un jour.

9. Générateur de grandeur de consigne selon l'une des revendications 4 à 8, caractérisé en ce que le module de commande (9) est commutable sur "vacances", de manière que le module de commande (9) lise au moyen du conducteur (8) les températures de consigne qui sont valables pour le dimanche et les utilise pour la durée d'une semaine.
